# EUROPÄISCHE PATENTSCHRIFT

(11) **EP 0 812 999 B1**
(45) Veröffentlichungstag und Bekanntmachung des Hinweises auf die Patenterteilung: **09.10.2002**
(21) Anmeldenummer: 97109049.3
(22) Anmeldetag: 04.06.1997
(51) Int. Cl.: F16F 7/09, F16H 7/12

(54) **Dämpfungsring**
Damping ring
Anneau d'amortissement

(30) Priorität: 13.06.1996 DE 29610404 U
(43) Veröffentlichungstag der Anmeldung: 17.12.1997
(73) Patentinhaber: JOH. WINKLHOFER & SÖHNE GmbH & Co KG, D-81369 München (DE)
(72) Erfinder: Bodensteiner, Martin, 85435 Erding (DE)
(74) Vertreter: Grünecker, Kinkeldey, Stockmair & Schwanhäusser Anwaltssozietät

(56) Entgegenhaltungen:
- DE-A- 4 203 448
- DE-A- 4 203 449
- DE-A- 4 304 389
- DE-A- 4 433 153
- FR-A- 1 193 095
- US-A- 4 010 940
- US-A- 5 117 786
- PATENT ABSTRACTS OF JAPAN vol. 012, no. 386 (M-754), 14.Oktober 1988 & JP 63 140138 A (HONDA MOTOR CO LTD), 11.Juni 1988,

## Beschreibung

Die Erfindung bezieht sich auf Spannvorrichtungen, insbesondere für endlose Zugmittel, mit einem eine Aufnahme- bzw. Führungsöffnung aufweisenden Gehäuse, einem in der Aufnahme- bzw Führungsöffnung aufgenommenen und gegenüber dem Gehäuse verschiebbaren Spannstößel, einem sich im wesentlichen gegengerichtet am Gehäuse und Spannstößel abstützenden Federenergiespeicher und einen zumindest bereichsweise zwischen Spannstößel und Gehäusewand angeordneten Reibungsdämpfelement, wobei das Reibungsdämpfelement eine Keilfläche aufweist, die mit einer Keilfläche am Spannstößel in Anlage bringbar ist, und das axiale Gegeneinanderpressen der Keilflächen für eine radiale Aufweitung des Reibungsdämpfelementes und für entsprechendes Anpressen des Reibungsdämpfelementes an der Gehäusewand sorgt.

Eine solche Spannvorrichtung ist aus der DE 42 03 448 A1 bekannt. Die dort beschriebene Riemenspannvorrichtung für den Antrieb von Hilfsaggregaten einer Brennkraftmaschine umfasst einen in ihrem Gehäuse angeordneten, unter einer Federvorspannung mittels einer Druckfeder stehenden Kolben. Der Kolben weist an seinem im Gehäuse angeordneten Ende einen Außenkonus auf, der mit einem unter Federspannung mittels einer Tellerfedersäule bestehenden Innenkonus zusammenwirkt. Der Außenkonus kann geschlitzt ausgeführt sein. Es besteht auch die Möglichkeit, Außen- und Innenkonus miteinander zu vertauschen. Zwischen den konischen Flächen sind reibungsmindernde Elemente, wie Wurmfedern, Polymerbeläge oder O-Ringe angeordnet, um ein Verklemmen der konischen Flächen zu verhindern.

Eine weitere Spannvorrichtung ist aus der DE-OS 43 11 056 bekannt. Der dort beschriebene Bewegungsdämpfer einer Spannvorrichtung eines endlosen Zugmittelgetriebes dient zur Dämpfung von auf das Zugmittel wirkenden Vibrationen und Impuls-Stöße. Das Reibungsdämpfelement ist bei dieser Vorrichtung unter radialer Vorspannung in einer Nut im Spannkolben angeordnet, die axial länger ist als das Reibungsdämpfelement. Diese Ausgestaltung sorgt dafür, dass geringfügige Vibrationsschwingungen nicht durch das Reibungsdämpfelement gedämpft werden, was ansonsten zu einem vorzeitigen Verschleiß führen kann. In letzter Zeit ist man darüber hinaus bestrebt, derartige Spannvorrichtungen hinsichtlich ihres Dämpfungsverhaltens variabler zu gestalten.

Es ist daher die Aufgabe der vorliegenden Erfindung eine verbesserte Spannvorrichtung der eingangs genannten Art bereitzustellen.

Diese Aufgabe wird erfindungsgemäß dadurch gelöst, dass die mit dem Gehäuse in Berührung stehende Reibfläche des Reibungsdämpfelementes ballig ausgebildet ist.

Hierdurch wird der Anpreßdruck zwischen Reibungsdämpfelement und Gehäusewand erhöht. Zusätzlich bietet die Balligkeit mehr Platz für elastische Verformungen, insbesondere im größeren Durchmesserbereich des Innenkonuses, so dass geringfügige Vibrationsschwingungen nicht zu unnötigen Dauerreibbelastungen führen.

Des Weiteren kann zum einen die Dämpfungsrichtung des Spannstößels abhängig von der Ausrichtung der Keilflächen festgelegt werden. Zum anderen werden durch die geometrische Ausführung der Keilflächen und der Kombinationsmöglichkeit verschiedenartiger Werkstoffe für den Spannstößel, das Reibungsdämpfelement und das Gehäuse die unterschiedlichsten Dämpfungseigenschaften erreicht. Das führt sogar so weit, dass das Reibungsdämpfelement eine stufenlose Rückschlagsicherung darstellen kann und große Impulsstöße nicht unweigerlich zu ungewollt großen großen Verschiebungen des Spannstößels führen. Selbst kleine Vibrationsschwingungen führen nicht zu einem übermäßigen Verschleiß des Reibungsdämpfelementes, da diese auch nicht zu einer ausreichenden Anpressung der beiden Keilflächen und somit zur Aufweitung des Reibungsdämpfungselementes führen. Durch diese Vorrichtung ist deshalb ein sich verstärkendes mechanisches Dämpfungselement geschaffen, das eine um so größere Dämpfung bereitstellt, je größer die Impulsstöße sind, die auf den Spannstößel wirken.

Bevorzugterweise kann das Reibungsdämpfungselement als mit einem Innenkonus versehener Reibring ausgebildet sein und der Spannstößel einen entsprechenden Außenkonus aufweisen. Diese geometrisch einfach auszubildende Variante läßt sich besonders einfach und kostengünstig herstellen. Darüber hinaus läßt sich eine sehr einfache zylindrische Reibungsfläche zwischen Reibring und Gehäusewand ausbilden.

Abhängig von der Werkstoffwahl und von den gewünschten Dämpfungseigenschaften bishin zur Rückschlagsicherung kann der Reibring zumindest in seinem Innenkonusbereich geschlitzt ausgeführt sein, so dass er eine größere Federwirkung besitzt und sich bereits durch geringfügigere Kräfte aufweiten läßt.

Vorrichtungsmäßig einfach auszubilden ist eine Variante, bei der der Außenkonus am unteren, im Gehäuse angeordneten Endbereich des Spannstößels angeordnet ist und der Reibring unterhalb des Spannstößels im Gehäuse angeordnet ist. Somit können Reibring und Spannstößel getrennt voneinander montiert werden und der Außenkonus am Spannstößel ist sehr einfach herzustellen.

Damit ein unmittelbares Ansprechen des Reibungsdämpfungselementes gewährleistet ist, kann eine Einrichtung, insbesondere ein Federenergiespeicher, zum ständigen Inanlagehalten des Reibungsdämpfelementes an den Spannstößel vorgesehen sein. Insbesondere wenn das Reibungsdämpfelement unterhalb des Spannstößels im Gehäuse angeordnet ist, läßt sich diese Variante besonders einfach ausgestalten.

Günstigerweise kann der Kegelwinkel des Konuses 50° bis 70°, bevorzugt 60°, betragen. Dieser Winkelbereich hat sich als besonders günstig zur Aufbringung entsprechender Dämpfungswerte herausgestellt.

Bei einer Ausführungsform besteht das Reibungsdämpfelement aus Kunststoff, insbesondere PTFE (Teflon). Durch eine solche Werkstoffwahl kann bei entsprechender geometrischer Ausführung des Konuses eine stufenlose Rückschlagsicherung gänzlich entfallen, weil die hierzu benötigten Reibkräfte nicht aufgebracht werden können. Im Gegensatz hierzu wird bei einer Ausführungsform das Reibungsdämpfelement aus Metall, insbesondere Stahl, hergestellt, so dass, wiederum abhängig von der geometrischen Ausgestaltung der Keilflächen, eine stufenlose Rückschlagsicherung sichergestellt ist.

Die erfindungsgemäße Spannvorrichtung eignet sich auch sehr gut zum Einsatz mit einer zusätzlichen hydraulischen Dämpfungseinrichtung, die in üblicher Weise im Innem zwischen dem Gehäuse und dem Spannstößel angeordnet ist. Hierzu werden dann bekannte Konstruktionselemente wie Drosselbohrung, Rückschlag- oder Überdruckventil eingesetzt.

Im folgenden wird nunmehr eine Ausführungsform der vorliegenden Erfindung anhand einer Zeichnung näher erläutert. Es zeigen:

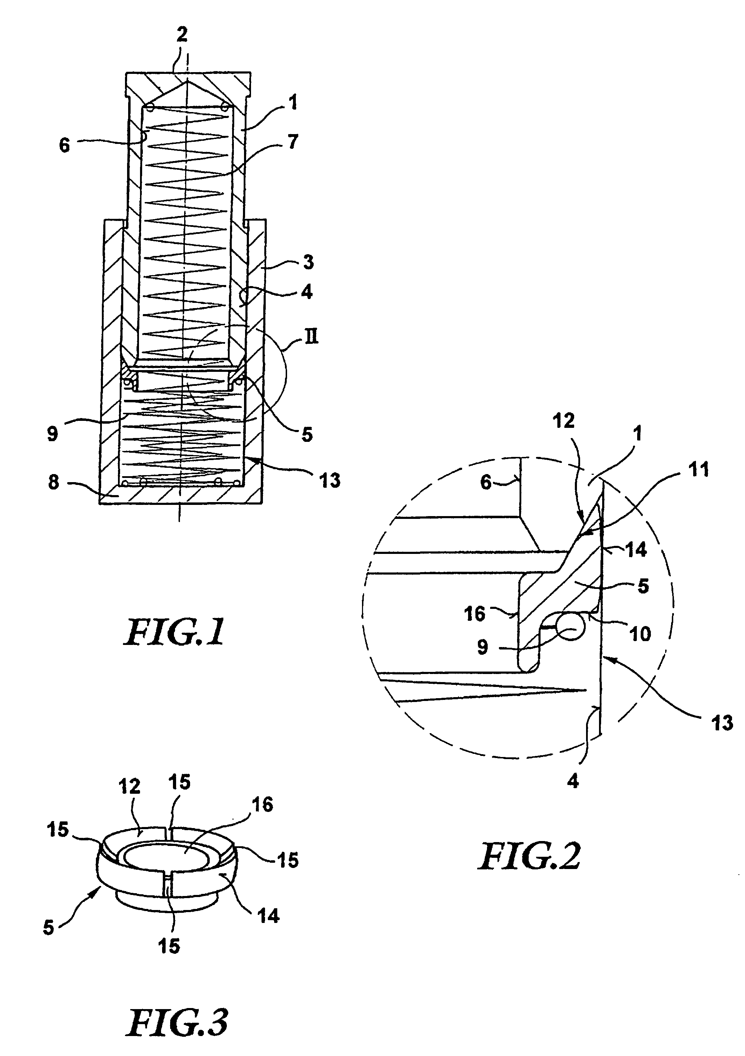

- Fig. 1: eine Vorderansicht einer erfindungsgemäßen Spannvorrichtung im Vollschnitt,
- Fig. 2: den Detailausschnitt II aus Figur 1 in vergrößerter Darstellung und
- Fig. 3: eine perspektivische Darstellung des Reibrings aus Figur 1.

Die dargestellte Spannvorrichtung wird zum Spannen eines endlosen Zugmittels, wie z.B. einer Antriebskette, für Zugmittelgetriebe eines Kraftfahrzeuges und zur Dämpfung der Vibrationen des Antriebselementes verwendet. Die Vorrichtung besteht im wesentlichen aus einem hohlzylindrischen Spannstößel 1, der an seinem Spannende 2 geschlossen ausgeführt ist, einem ebenfalls hohlzylindrischen Gehäuse 3 mit einer Aufnahme- bzw. Führungsöffnung 4 zur im wesentlichen paßgenauen Aufnahme des Spannstößels 1 und einem Reibungsdämpfelement in Form eines Reibringes 5, der unterhalb des Spannstößels 1 in ständiger Anlage gehalten ist. Innerhalb des Gehäuses 3 und axial innerhalb der Aufnahmeöffnung 6 des Spannstößels ist eine erste Schraubendruckfeder 7 angeordnet, die für eine entsprechende Vorspannung zwischen dem nicht dargestellten endlosen Antriebselement und der Vorrichtung sorgt. Die Druckfeder 7 stützt sich zum einen am Boden 8 des Gehäuses 3 und zum anderen an der Innenseite des Spannendes 2 des Spannstößels 2 ab. Innerhalb des Gehäuses 3 ist eine zweite Schraubendruckfeder 9 angeordnet, die kürzer ist als die erste Druckfeder 7 aber einen größeren Außendurchmesser aufweist, so daß die erste Druckfeder 7 innerhalb der zweiten Druckfeder 9 Platz findet. Die zweite Druckfeder 9 stützt sich an einer nach unten weisenden Anschlagstufe 10 des Reibringes 5 ab, so daß dieser in dauerhafter Anlage mit dem Spannstößel 1 gehalten ist.

Der Spannstößel weist an seinem unteren Ende einen Außenkonus 11 und der Reibring 5 einen dazu passenden Innenkonus 12 auf, so daß ein Bereich des Reibringes 5 zwischen dem Spannstößel 1 und der Gehäusewandung 13 angeordnet ist. Die Außenfläche 14 des Reibringes 5 ist in Achsrichtung des Reibringes 5 ballig ausgeführt, so daß im unbelasteten Zustand im wesentlichen von einer Linienberührung zwischen Reibring 5 und Gehäusewandung 13 ausgegangen werden kann. Des weiteren ist der Reibring 5 im Bereich des Innenkonuses 12 und über die gesamte Länge der Außenfläche 14 hinweg mit mehreren Schlitzen 15 versehen, so daß eine vereinfachte Aufweitung des Reibringes 5 stattfinden kann.

Selbstverständlich ist die Öffnung 16 des Reibringes 5 so groß, daß die erste Druckfeder 7 mit Spiel durch diese hindurchgeführt werden kann.

Der Vollständigkeit halber sei an dieser Stelle angemerkt, daß zwar die Figuren eine Ausführungsform zeigen, bei der eine rein mechanische Dämpfung vorgesehen ist, daß jedoch ohne weiteres diese Spannvorrichtung mit zusätzlicher hydraulischer Dämpfung ausgeführt werden kann. Hierzu dient in bekannter Weise der Raum zwischen Spannstößel 1 und Gehäuse 3 zur Aufnahme eines entsprechenden Hydraulikfluids.

Im folgenden wird die Wirkungs- und Funktionsweise der oben beschriebenen Ausführungsform näher erläutert.

Die Vorrichtung wird unter Vorspannung eingebaut, so daß die Druckfeder 7 und Druckfeder 9 entsprechend zusammengedrückt sind. Somit befinden sich der Spannstößel 1 und der Druckring 5 in Anlage und in ihrer Vorspannstellung. Wird nunmehr das Zugmittelgetriebe betrieben, so daß Impulsstöße und Vibrationen auftreten, dann erfolgt eine entsprechende Bewegung des Spannstößels 2 relativ zum festverankerten Gehäuse 3. Abhängig von der Größe der Impulsstöße und der Vibration wird der Außenkonus 11 fester oder weniger fest auf den Innenkonus 12 des Reibringes 5 aufgedrückt. Aufgrund der trägen Masse des Reibringes 5 kommt es unter der Hilfestellung der Schlitze 15 zur Aufweitung des Reibringes und zur verstärkten Anpressung der balligen Außenfläche 14 an die Gehäusewand 13. Bei entsprechend großen Impulsstößen kann es dabei auch zu solch einer Verkeilung zwischen Reibring 5 und Spannstößel 1 kommen, daß an der Stelle, an der sich der Spannstößel sich im Augenblick dieses Impulsstoßes befunden hat, eine Rückschlagsicherung bereitgestellt ist. Hierdurch werden übermäßig große Schwingungen des Zugmittels vermieden. Darüber hinaus ist diese Rückschlagsicherung im wesentlichen unabhängig von der momentanen Position des Spannstößels 1 innerhalb des Gehäuses 3.

Die Art und Größe der entsprechenden Dämpfung, die bei bestimmten Impulsstößen bzw. Vibrationsschwingungen bereitgestellt wird, hängt sehr stark von den verwendeten Materialien, insbesondere vom Werkstoff des Reibringes 5, der geometrischen Ausgestaltung des Außen- und Innenkonuses 11, 12 sowie der Außenfläche 14 ab. Dadurch können ohne weiteres Ausführungsformen bereitgestellt werden, die überhaupt keine Rückschlagsicherung aufweisen, sondern bei denen lediglich eine verstärkte Dämpfung vorhanden ist, je höher der Impulsstoß ist.

Wie oben bereits erwähnt, lassen sich die Varianten des Dämpfungsverhaltens einer solchen Vorrichtung nochmals durch die Kombination mit einem hydraulischen Dämpfungskreislauf ergänzen. Hierzu werden dann entsprechende bekannte Konstruktionselemente wie Drosselbohrung, Rückschlag- oder Überdruckventil verwendet.

## Patentansprüche

1. Spannvorrichtung, insbesondere für endlose Zugmittel, mit einem eine Aufnahme- bzw. Führungsöffnung (4) aufweisenden Gehäuse (3), einem in der Aufnahme- bzw. Führungsöffnung (4) aufgenommenen und gegenüber dem Gehäuse (3) verschiebbaren Spannstößel (1), einem sich im wesentlichen gegengerichtet am Gehäuse (3) und Spannstößel (1) abstützenden Federenergiespeicher (7) und einem zumindest bereichsweise zwischen Spannstößel (1) und Gehäusewand (13) angeordneten Reibungsdämpfelement (5), wobei das Reibungsdämpfelement (5) eine Keilfläche (12) aufweist, die mit einer Keilfläche (11) am Spannstößel (1) in Anlage bringbar ist, wobei das axiale Gegeneinanderpressen der Keilflächen (11, 12) für eine radiale Aufweitung des Reibungsdämpfelementes (5) und für entsprechendes Anpressen des Reibungsdämpfelementes (5) an der Gehäusewand (13) sorgt, **dadurch gekennzeichnet,**
**dass** die mit dem Gehäuse (3) in Berührung stehende Reibfläche (14) des Reibungsdämpfelementes (5) ballig ausgebildet ist.

2. Spannvorrichtung nach Anspruch 1,
**dadurch gekennzeichnet,**
**dass** das Reibungsdämpfelement (5) als mit einem Innenkonus (12) versehener Reibring ausgebildet ist und der Spannstößel (1) einen entsprechenden Außenkonus (11) aufweist.

3. Spannvorrichtung nach Anspruch 2,
**dadurch gekennzeichnet,**
**dass** der Reibring (5) zumindest in seinem Innenkonusbereich geschlitzt ausgeführt ist.

4. Spannvorrichtung nach Anspruch 2 oder 3,
**dadurch gekennzeichnet,**
**dass** der Außenkonus (11) am unteren, im Gehäuse (3) angeordneten Endbereich des Spannstößels (1) angeordnet ist und der Reibring (5) unterhalb des Spannstößels (1) im Gehäuse (3) angeordnet ist.

5. Spannvorrichtung nach einem der Ansprüche 1 bis 4,
**dadurch gekennzeichnet,**
**dass** eine Einrichtung (9), insbesondere ein Federenergiespeicher, zum ständigen Inanlagehalten des Reibungsdämpfelementes (5) an dem Spannstößel (1) vorgesehen ist.

6. Spannvorrichtung nach einem der Ansprüche 1 bis 5,
**dadurch gekennzeichnet,**
**dass** der Kegelwinkel des Konuses 50° bis 70°, bevorzugt 60°, beträgt.

7. Spannvorrichtung nach einem der Ansprüche 1 bis 6,
**dadurch gekennzeichnet,**
**dass** das Reibungsdämpfelement (5) aus Kunststoff, insbesondere PTFE, besteht.

8. Spannvorrichtung nach einem der Ansprüche 1 bis 7,
**dadurch gekennzeichnet,**
**dass** das Reibungsdämpfungselement (5) aus Metall, insbesondere Stahl, besteht.

9. Spannvorrichtung nach einem der Ansprüche 1 bis 8, die zusätzlich mit einer hydraulischen Dämpfungseinrichtung versehen ist.

## Claims

1. Tensioning device, in particular for endless traction means, having a housing (3) possessing a receiving or guide opening (4), a tensioning ram (1) accommodated in the receiving or guide opening and movable with respect to the housing (3), a spring energy store (7) braced substantially in opposition against the housing (3) and tensioning ram (1) and a friction damping member (5) arranged at least in sections between the tensioning ram (1) and the housing wall (13), wherein the friction damping member (5) possesses a wedging surface (12) which can be brought into contact with a wedging surface (11) on the tensioning ram (1), wherein the axial pressing of the wedging surfaces (11, 12) against one another ensures radial widening of the friction damping member (5) and corresponding application of pressure from the friction damping member (5) on the housing wall (13), **characterised in that** the friction surface (14) of the friction damping member (5) in contact with the housing (3) is of convex construction.

2. Tensioning device according to Claim 1, **characterised in that** the friction damping member (5) is constructed in the form of a friction ring provided with an inner cone (12) and the tensioning ram (1) possesses a corresponding outer cone (11).

3. Tensioning device according to Claim 2, **characterised in that** the friction ring (5) is of slotted construction at least in its inner cone region.

4. Tensioning device according to Claim 2 or 3, **characterised in that** the outer cone (11) is arranged on the lower end region arranged in the housing (3) of the tensioning ram (1) and the friction ring (5) is arranged below the tensioning ram (1) in the housing (3).

5. Tensioning device according to one of Claims 1 to 4, **characterised in that** a device (9), in particular a spring energy store, is provided for constantly holding the friction damping member (5) in contact against the tensioning ram (1).

6. Tensioning device according to one of Claims 1 to 5, **characterised in that** the cone angle of the cone is from 50° to 70°, preferably 60°.

7. Tensioning device according to one of Claims 1 to 6, **characterised in that** the friction damping member (5) is composed of plastic, in particular PTFE.

8. Tensioning device according to one of Claims 1 to 7, **characterised in that** the friction damping member (5) is composed of metal, in particular steel.

9. Tensioning device according to one of Claims 1 to 8 which is additionally provided with a hydraulic damping device.

## Revendications

1. Dispositif de tension, notamment pour mécanisme de traction sans fin, comportant un boîtier (3) qui présente un logement ou une ouverture de guidage (4), un coulisseau de tension (1) reçu dans le logement ou dans l'ouverture de guidage (4) et pouvant coulisser par rapport au boîtier (3), une unité de stockage d'énergie (7) dirigée essentiellement en sens inverse dans le boîtier (3) et un élément d'amortissement de frottement (5) disposé au moins dans la même zone entre le coulisseau de tension (1) et la paroi (3) du boîtier, dans lequel l'élément d'amortissement de frottement (5) présente une surface en coin (12) qui peut être mise en contact avec une surface en coin (11) sur le coulisseau de tension (1), et dans lequel l'application mutuelle axiale sous pression des surfaces en coin (11, 12) assure un élargissement radial de l'élément d'amortissement de frottement (5) et une application sous pression correspondante de l'élément d'amortissement de frottement (5) sur la paroi (13) du boîtier, **caractérisé en ce que** la surface de frottement (14) de l'élément d'amortissement de frottement (5) se trouvant en contact avec le boîtier (3) est bombée.

2. Dispositif de tension selon la revendication 1 **caractérisé en ce que** l'élément d'amortissement de frottement (5) est réalisé sous la forme d'un anneau de frottement pourvu d'un cône intérieur (12) et le coulisseau de tension (1) comporte un cône extérieur (11) correspondant.

3. Dispositif de tension selon la revendication 2 **caractérisé en ce que** l'anneau de frottement (5) est fendu au moins dans sa zone du cône intérieur.

4. Dispositif de tension selon la revendication 2 ou 3 **caractérisé en ce que** le cône extérieur (11) est disposé dans le boîtier (3) dans la zone terminale inférieure du coulisseau de tension (1) et **en ce que** l'anneau de frottement (5) est placé dans le boîtier (3) au- dessous du coulisseau de tension (1).

5. Dispositif de tension selon l'une des revendications 1 à 4 **caractérisé en ce qu'**il est prévu un dispositif (9), notamment une unité de stockage d'énergie, pour maintenir un contact intérieur constant de l'élément d'amortissement de frottement (5) sur le coulisseau de tension (1).

6. Dispositif de tension selon l'une des revendications 1 à 5 **caractérisé en ce que** l'angle du cône est de 50° à 70°, de préférence de 60°.

7. Dispositif de tension selon l'une des revendications 1 à 6 **caractérisé en ce que** l'élément d'amortissement de frottement (5) est constitué en une matière synthétique, notamment du PTFE.

8. Dispositif selon l'une des revendications 1 à 7 **caractérisé en ce que** l'élément d'amortissement de frottement (5) est constitué en métal, notamment de l'acier.

9. Dispositif de tension selon l'une des revendications 1 à 8, muni en outre d'un dispositif d'amortissement hydraulique.
